# FASCICULE DE BREVET EUROPEEN

(11) **EP 3 726 031 B1**
(45) Date de publication et mention de la délivrance du brevet: **12.01.2022**
(21) Numéro de dépôt: 20169893.3
(22) Date de dépôt: 16.04.2020
(51) Int. Cl.: F02C 7/36, F16H 1/28

(54) **REDUCTEUR MECANIQUE DE TURBOMACHINE D AERONEF**
MECHANISCHES REDUKTIONSGETRIEBE FÜR LUFTFAHRZEUG-TURBOTRIEBWERK
MECHANICAL GEAR FOR AIRCRAFT TURBINE ENGINE

(30) Priorité: 16.04.2019 FR 1904052
(43) Date de publication de la demande: 21.10.2020
(73) Titulaire: Safran Transmission Systems, 92700 Colombes (FR)
(72) Inventeur: SIMON, Adrien, Louis, 77550 MOISSY-CRAMAYEL (FR); LEFEBVRE, Simon, Loïc, Clément, 77550 MOISSY-CRAMAYEL (FR); MOULY, Guillaume, Pierre, 77550 MOISSY-CRAMAYEL (FR)
(74) Mandataire: Gevers & Orès

(56) Documents cités:
- EP-A1- 3 361 122
- DE-C- 814 981
- US-A- 3 188 888
- US-A1- 2013 192 264

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1 -2 987 416, FR-A1 -3 008 462, FR-A1-3 008 462, FR-A1 -3 041 054 et US-A-3188888.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent être composés de un ou plusieurs étages d'engrènement. Cet engrènement est assuré de différentes façons comme par contact, par friction ou encore par champs magnétique. Il existe plusieurs types d'engrènement par contact comme avec des dentures droites, hélicoïdales ou en chevron.

L'augmentation des rapports de réduction des architectures des moteurs cibles pousse à utiliser des réducteurs dits « double étage ». En effet, au-delà d'un rapport de l'ordre de 7, la technologie dite « simple étage » perd son intérêt car n'est plus assez compacte. Il faut alors utiliser des réducteurs dits « double étage ».

Dans une technologie simple étage, c'est la même denture d'un satellite qui coopère avec le solaire et la couronne. Dans une technologie double étage, la denture du satellite qui coopère avec le solaire est différente de la denture du satellite qui coopère avec la couronne. En général, les dentures d'un satellite qui coopèrent respectivement avec le solaire et la couronne ont des diamètres moyens différents.

La principale problématique des réducteurs double étage réside dans le fait qu'ils sont asymétriques par rapport à un plan perpendiculaire à l'axe X. Ainsi, la puissance rentrant à l'aval par l'intérieur et ressortant à l'amont par l'extérieur génère des moments non négligeables au niveau des satellites (les expressions « amont » et « aval » faisant référence à l'écoulement général des gaz dans la turbomachine). Egalement, pour gagner en compacité et en qualité d'engrènement, il est préférable d'utiliser des dentures hélicoïdales.

Les dentures hélicoïdales génèrent des efforts axiaux non négligeables, au niveau des interfaces entre le réducteur et le moteur.

L'utilisation de dentures en chevron pourrait résoudre ces problématiques d'effort axial. Cependant, cela ne résout pas les moments aux paliers et complexifie le montage et la fabrication du réducteur.

La présente invention propose un perfectionnement à cette technologie qui est simple, efficace et économique.

### Résumé de l'invention

L'invention concerne un réducteur mécanique de turbomachine, en particulier d'aéronef, ce réducteur comportant :
- un solaire ayant un axe de rotation,
- une couronne qui s'étend autour du solaire,
- des satellites qui sont engrenés avec le solaire et la couronne et qui sont maintenus par un porte-satellites, chaque satellite comportant une première denture de diamètre moyen D1 pour l'engrènement avec le solaire, et une seconde denture de diamètre moyen D2, inférieur à D1, pour l'engrènement avec la couronne,
caractérisé en ce que les première et seconde dentures de chaque satellite présentent une symétrie par rapport à un plan perpendiculaire audit axe et passant sensiblement au milieu du satellite,
et en ce que chacune des première et seconde dentures comprend des dents en chevron, le chevron de la première denture étant formé par des dents amont de la première denture séparées de dents aval de la première denture en étant disposées de part et d'autre du plan, et les dents amont de la seconde denture étant séparées des dents aval de la seconde denture par la première denture.

L'utilisation de satellites à dentures symétriques permet de résoudre le problème précité de moments aux paliers des satellites. Par ailleurs, les dentures des satellites sont en chevron pour optimiser la compacité et l'engrènement du réducteur.

Dans la présente demande, on entend par une denture à dents en chevron, une denture comportant deux séries de dents orientées dans des directions différentes. Les dents de la première série sont inclinées par rapport à l'axe autour duquel s'étend cette première série, et les dents de la seconde série sont inclinées différemment par rapport à son axe. Les dents des deux séries sont ainsi inclinées les unes par rapport aux autres pour former des chevrons.

Le réducteur selon l'invention peut comprendre une ou plusieurs des caractéristiques suivantes, prises isolément les unes des autres, ou en combinaison les unes avec les autres :
- les dents amont de la première denture sont séparées par une rainure annulaire des dents aval de cette première denture ;
- chaque satellite comprend un corps cylindrique et un voile annulaire s'étendant sensiblement radialement vers l'extérieur depuis le milieu de ce corps, les dents de la seconde denture étant situées aux extrémités axiales du corps, et les dents de la première denture étant situées à la périphérie externe du voile ;
- le solaire comprend une denture à dents en chevron et comportant des dents amont et aval situées respectivement de part et d'autre dudit plan ;
- la couronne comprend une denture à dents en chevron et comportant des dents amont et aval situées respectivement de part et d'autre dudit plan et séparées l'une de l'autre par la seconde denture ;
- les dents de la couronne sont portées respectivement par deux anneaux fixés l'un et l'autre sur un porte-couronne ;
- le porte-couronne a une forme générale biconique et sensiblement symétrique par rapport audit plan qui passe par le milieu de plus grand diamètre du porte-couronne ;
- le porte-couronne comprend à ses extrémités des paliers pour guider le porte-satellites ou un arbre d'entraînement du porte-satellites ;
- la couronne est configurée pour être immobile en rotation autour dudit axe, et le porte-satellites est configuré pour être mobile en rotation autour de cet axe.

L'invention concerne en outre une turbomachine, en particulier d'aéronef, comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une vue partielle en coupe axiale d'un réducteur mécanique,
[Fig.3] la figure 3 est une autre vue partielle en coupe axiale d'un réducteur mécanique, et illustre la technique antérieure à la présente invention,
[Fig.4] la figure 4 est une vue schématique en coupe axiale et en perspective d'un réducteur selon l'invention, et
[Fig.5] la figure 5 est une autre vue schématique en coupe axiale du réducteur de la figure 4.

### Description détaillée de l'invention

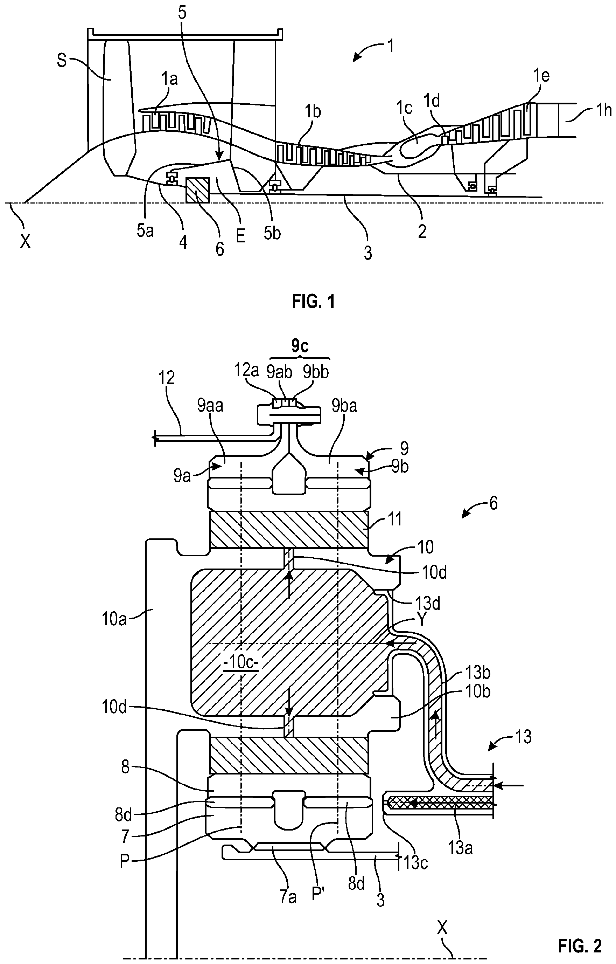

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie nous avons :
▪ Dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ Dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.
▪ Dans une autre configuration différentielle, l'ensemble des satellites 8 est maintenu par un porte-satellites 10 qui est relié à un premier arbre de soufflante 5. Chaque satellite entraine la couronne qui est rapportée à un second arbre de soufflante contrarotatif 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un satellite peut être séparée en plusieurs hélices ou dents présentant chacun un plan médian P, P'. Dans notre exemple, nous détaillons le fonctionnement d'un réducteur dont chaque satellite comprend deux séries de dents en chevron coopérant avec une couronne séparée en deux demi-couronnes:
▪ Une demi-couronne amont 9a constituée d'une jante 9aa et d'une demi-bride de fixation 9ab. Sur la jante 9aa se trouve l'hélice avant engrenée avec une hélice de la denture 8d de chaque satellite 8. L'hélice de la denture 8d engrène également avec celle du solaire 7.
▪ Une demi-couronne aval 9b constituée d'une jante 9ba et d'une demi-bride de fixation 9bb. Sur la jante 9ba se trouve l'hélice arrière engrenée avec une hélice de la denture 8d de chaque satellite 8. L'hélice de la denture 8d engrène également avec celle du solaire 7.

Si les largeurs d'hélice varient entre le solaire 7, les satellites 8 et la couronne 9 à cause des recouvrements de denture, elles sont toutes centrées sur un plan médian P pour les dents amont et sur un autre plan médian P' pour les dents aval.

La figure 2 illustre ainsi le cas d'un réducteur à simple étage d'engrènement, c'est-à-dire qu'une même denture 8d de chaque satellite 8 coopère à la fois avec le solaire 7 et la couronne 9. Même si la denture 8d comprend deux séries de dents, ces dents ont le même diamètre moyen et forment une seule et même denture appelée chevron.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

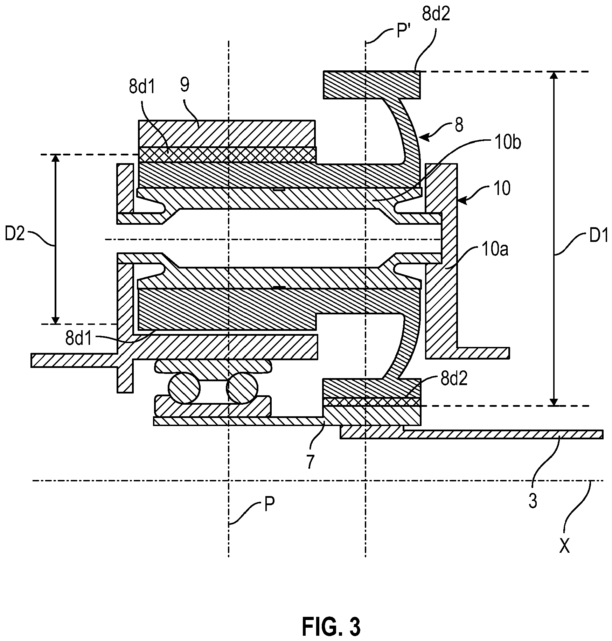

La figure 3 montre un autre exemple d'architecture de réducteur, dit à double étage d'engrènement, dans lequel chaque satellite 8 comprend deux dentures 8d1, 8d2 distinctes configurées pour coopérer respectivement avec la couronne 9 et le solaire 7.

Dans cette figure 3, les éléments déjà décrits dans ce qui précède sont désignés par les mêmes références.

La denture 8d1 d'engrènement avec la couronne 9 a un diamètre moyen noté D2 et est situé dans un plan médian P. La denture 8d2 d'engrènement avec le solaire 7 a un diamètre moyen noté D1 et est situé dans un autre plan médian P'. Les plans médians P, P' sont parallèles entre eux et perpendiculaires à l'axe X. Le diamètre D2 est inférieur au diamètre D1. Enfin, chaque denture 8d1, 8d2 comprend ici une seule hélice.

Comme évoqué dans ce qui précède, cette architecture « double étage » génère des moments non négligeables au niveau des satellites 8.

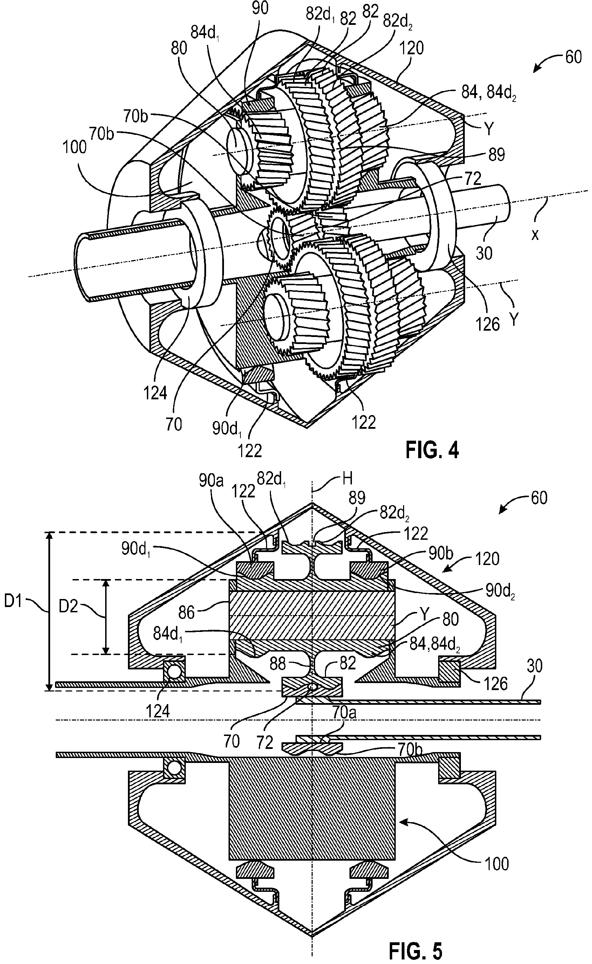

La présente invention propose de résoudre ce problème grâce à des satellites à double étage et à dentures symétriques, un mode préféré de réalisation de l'invention étant représenté aux figures 4 et 5.

Le réducteur 60 des figures 4 et 5 comprend :
- un solaire 70 ayant un axe de rotation X,
- une couronne 90 qui s'étend autour du solaire et qui est configurée pour être immobile en rotation autour de l'axe X, et
- des satellites 80 qui sont engrenés avec le solaire 70 et la couronne 90 et qui sont maintenus par un porte-satellites 100 qui est configuré pour être mobile en rotation autour de l'axe X.

On définit le plan H comme étant un plan médian perpendiculaire à l'axe X et passant sensiblement au milieu du réducteur 60 (figure 5).

Le solaire 70 comprend des cannelures internes 70a d'accouplement avec l'arbre BP 30 ainsi qu'une denture externe 70b d'engrènement avec les satellites 80. La denture 70b présente deux séries de dents adjacentes en chevron, séparées l'une de l'autre par une rainure annulaire 72 orientée radialement vers l'extérieur. La denture 70b est symétrique par rapport au plan H, ses dents étant situées de part et d'autre du plan H qui passe par la rainure 72.

La couronne 90 est formée par deux anneaux indépendants 90a, 90b et comprend une denture qui est séparée en deux séries de dents 90d1, 90d2 en chevron portées respectivement par les deux anneaux.

Les anneaux 90a, 90b sont disposés de manière symétrique par rapport au plan H qui s'étend donc entre ces anneaux. Les anneaux sont reliés et fixés à un porte-couronne 120 par l'intermédiaire de flasques annulaires 122 de liaison. Les flasques 122 sont indépendants l'un de l'autre, chaque flasque ayant en demi section axiale une forme générale en S lui procurant une certaine souplesse radiale par déformation élastique en fonctionnement. Chaque anneau 90a, 90b s'étend autour de l'axe X et est fixé au flasque 122 correspondant par sa périphérie externe. Sa périphérie interne comprend une des dents 90d1, 90d2.

Dans l'exemple représenté qui n'est pas limitatif, le porte couronne 120 a une forme générale annulaire autour de l'axe X et plus particulièrement biconique. Il comprend ainsi un premier tronçon amont ou à gauche sur le dessin, avec une extrémité amont de plus petit diamètre, et une extrémité aval de plus grand diamètre qui est reliée à l'extrémité amont de plus grand diamètre de l'autre tronçon, aval ou à droite sur le dessin. Les extrémités de plus grand diamètre des tronçons sont donc reliées entre elles, et leurs extrémités de plus petits diamètres forment les extrémités axiales du porte-couronne.

L'extrémité amont du porte-couronne 120 s'étend autour du porte-satellites 100 ou d'un arbre relié à ce porte-satellites, et est centré et guidé en rotation sur le porte-satellite ou l'arbre par l'intermédiaire d'au moins un palier 124. De la même façon, l'extrémité aval du porte-couronne 120 s'étend autour du porte-satellites 100 ou d'un arbre relié à ce porte-satellites, et est centré et guidé en rotation sur le porte-satellite ou l'arbre par l'intermédiaire d'au moins un autre palier 126.

Comme c'est le cas de la couronne 90, le porte-couronne 120 présente une symétrie par rapport au plan H qui coupe le porte-couronne en son milieu et passe donc par les extrémités de plus grand diamètre des tronçons précités. Chaque satellite 80 comporte une première denture 82 de diamètre moyen D1 pour l'engrènement avec le solaire 70, et une seconde denture 84 de diamètre moyen D2, différent de D1 et en particulier inférieur à D1, pour l'engrènement avec la couronne 90. Les diamètres moyens sont mesurés depuis l'axe Y de chaque satellite et représente la moyenne entre le diamètre maximal et le diamètre minimal d'une denture de ce satellite.

Chaque satellite 80 comprend un corps cylindrique 86 et un voile annulaire 88 s'étendant sensiblement radialement vers l'extérieur depuis le milieu de ce corps 86. La denture 84 est séparée en deux séries de dents 84d1, 84d2 en chevron qui sont situées respectivement sur les extrémités axiales du corps 86. La denture 82 comprend deux séries de dents 82d1, 82d2 en chevron qui sont situées à la périphérie externe du voile 88 et qui sont séparées l'une de l'autre par une rainure annulaire 89 débouchant radialement vers l'extérieur par rapport à l'axe Y.

La denture 82 est traversée en son milieu par le plan H qui passe par la rainure 89, les dents 82d1, 82d2 étant donc disposées de part et d'autre du plan H. Les dents 84d1, 84d2 sont également disposées de manière symétrique par rapport au plan H.

La denture 82 et la périphérie externe du voile 88 ont une dimension axiale qui est inférieure à la distance axiale entre les anneaux 90a, 90b, ainsi qu'entre les flasques 122, de façon à ce que chaque satellite 80 puisse librement tourner dans le porte-couronne 120 et entre les anneaux 90a, 90b et les flasques 122.

La solution propose ainsi de « symétriser » des dentures des satellites du réducteur afin de symétriser les efforts axiaux ainsi que les moments auxquels les satellites sont soumis en fonctionnement. Cette solution permet en outre de gagner en longueur ou dimension axiale vis-à-vis d'une denture chevron par disparition de la gorge inter-denture de l'étage d'engrènement avec la couronne.

Cette solution est notamment compatible :
- d'une utilisation « épicycloïdale » à porte-satellites tournant et couronne fixe ;
- d'une utilisation « planétaire » à couronne tournante et porte-satellites fixe
- d'une utilisation « différentiel » à couronne et porte-satellites tournants.
- de paliers à éléments roulants et également de paliers hydrodynamiques
- d'un porte-satellite monobloc ou en plusieurs parties.

## Revendications

1. Réducteur mécanique (60) de turbomachine (1), en particulier d'aéronef, ce réducteur comportant :
- un solaire (70) ayant un axe (X) de rotation,
- une couronne (90) qui s'étend autour du solaire (70),
- des satellites (80) qui sont engrenés avec le solaire (70) et la couronne (90) et qui sont maintenus par un porte-satellites (100), chaque satellite (80) comportant une première denture (82) de diamètre moyen D1 pour l'engrènement avec le solaire (70), et une seconde denture (84) de diamètre moyen D2, différent de D1, pour l'engrènement avec la couronne (90), chacune des première et seconde dentures (82, 84) comportant des dents (82d1, 82d2, 84d1, 84d2) en chevron,
**caractérisé en ce que** les première et seconde dentures (82, 84) de chaque satellite (80) présentent une symétrie par rapport à un plan (H) perpendiculaire audit axe (X) et passant au milieu du satellite (80),
et **en ce que** le chevron de la première denture est formé par des dents amont (82d1) de la première denture (82) séparées de dents aval (82d2) de la première denture (82) en étant disposées de part et d'autre du plan (H), et les dents amont (84d1) de la seconde denture (84) sont séparées des dents aval (84d2) de la seconde denture (84) par la première denture (82).

2. Réducteur mécanique (60) selon la revendication précédente, dans lequel les dents amont (82d1) de la première denture (82) sont séparées par une rainure annulaire (89) des dents aval (82d2) de cette première denture (82).

3. Réducteur mécanique (60) selon l'une des revendications précédentes, dans lequel chaque satellite (80) comprend un corps (86) cylindrique et un voile (88) annulaire s'étendant radialement vers l'extérieur depuis le milieu de ce corps (86), les dents (84d1, 84d2) de la seconde denture (84) étant situées aux extrémités axiales du corps, et les dents (82d1, 82d2) de la première denture (82) étant situées à la périphérie externe du voile (88).

4. Réducteur mécanique (60) selon l'une des revendications précédentes, dans lequel le solaire (70) comprend une denture à dents en chevron et comportant des dents (70a, 70b) amont et aval situées respectivement de part et d'autre dudit plan (H).

5. Réducteur mécanique (60) selon l'une des revendications précédentes, dans lequel la couronne (90) comprend une denture à dents en chevron et comportant des dents (90d1, 90d2) amont et aval situées respectivement de part et d'autre dudit plan (H) et séparées l'une de l'autre par la seconde denture (84).

6. Réducteur mécanique (60) selon la revendication précédente, dans lequel les dents (90d1, 90d2) de la couronne (90) sont portées respectivement par deux anneaux (90a, 90b) fixés l'un et l'autre sur un porte-couronne (120).

7. Réducteur mécanique (60) selon la revendication précédente, dans lequel le porte-couronne (120) a une forme générale biconique et symétrique par rapport audit plan (H) qui passe par le milieu de plus grand diamètre du porte-couronne.

8. Réducteur mécanique (60) selon la revendication précédente, dans lequel le porte-couronne (120) comprend à ses extrémités des paliers (124, 126) pour guider le porte-satellites (100) ou un arbre d'entraînement du porte-satellites.

9. Réducteur mécanique (60) selon l'une des revendications précédentes, dans lequel la couronne (90) est configurée pour être immobile en rotation autour dudit axe (X), et le porte-satellites (100) est configuré pour être mobile en rotation autour de cet axe.

10. Turbomachine (1), en particulier d'aéronef, comportant un réducteur mécanique (60) selon l'une des revendications précédentes.

## Patentansprüche

1. Mechanisches Untersetzungsgetriebe (60) für eine Turbomaschine (1), insbesondere eines Luftfahrzeugs, wobei das Reduktionsgetriebe Folgendes umfasst:
- ein Sonnenrad (70) mit einer Drehachse (X),
- eine Krone (90), die sich um das Sonnenrad (70) erstreckt,
- Planetenräder (80), die mit dem Sonnenrad (70) und der Krone (90) kämmen und die von einem Planetenradträger (100) gehalten werden, wobei jedes Planetenrad (80) eine erste Verzahnung (82) mit einem mittleren Durchmesser D1 zum Kämmen mit dem Sonnenrad (70) und eine zweite Verzahnung (84) mit einem mittleren Durchmesser D2, der sich von D1 unterscheidet, zum Kämmen mit der Krone (90) umfasst, wobei jede der ersten und zweiten Verzahnungen (82, 84) Pfeilzähne (82d1, 82d2, 84d1, 84d2) umfasst,
**dadurch gekennzeichnet, dass** die ersten und zweiten Verzahnungen (82, 84) jedes Planetenrads (80) in Bezug auf eine zu besagter Achse (X) senkrechten Ebene (H) symmetrisch sind, die durch die Mitte des Planetenrads (80) verläuft,
und dass die Fischgrätenform der ersten Verzahnung durch vorgelagerte Zähne (82d1) der ersten Verzahnung (82) gebildet wird, die von nachgelagerten Zähnen (82d2) der ersten Verzahnung (82) getrennt sind, indem sie auf beiden Seiten der Ebene (H) angeordnet sind, und die vorgelagerten Zähne (84d1) der zweiten Verzahnung (84) von den nachgelagerten Zähnen (84d2) der zweiten Verzahnung (84) durch die erste Verzahnung (82) getrennt sind.

2. Mechanisches Untersetzungsgetriebe (60) nach dem vorstehenden Anspruch, worin die vorgelagerten Zähne (82d1) der ersten Verzahnung (82) durch eine ringförmige Nut (89) von den nachgelagerten Zähnen (82d2) dieser ersten Verzahnung (82) getrennt sind.

3. Mechanisches Untersetzungsgetriebe (60) nach einem der vorstehenden Ansprüche, worin jedes Planetenrad (80) einen zylindrischen Körper (86) und einen ringförmigen Steg (88) umfasst, die sich von der Mitte dieses Körpers (86) radial nach außen erstreckt, wobei die Zähne (84d1, 84d2) der zweiten Verzahnung (84) an den axialen Enden des Körpers und die Zähne (82d1, 82d2) der ersten Verzahnung (82) am Außenumfang des Stegs (88) angeordnet sind.

4. Mechanisches Untersetzungsgetriebe (60) nach einem der vorstehenden Ansprüche, worin das Sonnenrad (70) eine Verzahnung mit Pfeilzähnen umfasst, die vorgelagerte und nachgelagerte Zähne (70a, 70b) aufweist, die jeweils auf beiden Seiten der besagten Ebene (H) angeordnet sind.

5. Mechanisches Untersetzungsgetriebe (60) nach einem der vorstehenden Ansprüche, worin die Krone (90) eine Verzahnung mit Pfeilzähnen umfasst, die vorgelagerte und nachgelagerte Zähne (90d1, 90d2) aufweist, die sich jeweils auf beiden Seiten der besagten Ebene (H) befinden und durch die zweite Verzahnung (84) voneinander getrennt sind.

6. Mechanisches Untersetzungsgetriebe (60) nach dem vorstehenden Anspruch, worin die Zähne (90d1, 90d2) der Krone (90) jeweils von zwei Ringen (90a, 90b) getragen werden, die jeweils an einem Kronenträger (120) befestigt sind.

7. Mechanisches Untersetzungsgetriebe (60) nach dem vorstehenden Anspruch, worin der Kronenträger (120) eine allgemein bikonische und in Bezug auf die besagte Ebene (H), die durch die Mitte des größten Durchmessers des Kronenträgers verläuft, symmetrische Form aufweist.

8. Mechanisches Untersetzungsgetriebe (60) nach dem vorstehenden Anspruch, worin der Kronenträger (120) an seinen Enden Lager (124, 126) zur Führung des Planetenradträgers (100) oder einer Antriebswelle des Planetenradträgers aufweist.

9. Mechanisches Untersetzungsgetriebe (60) nach einem der vorstehenden Ansprüche, worin die Krone (90) um die besagte Achse (X) drehfest konfiguriert ist, und der Planetenradträger (100) um diese Achse drehbeweglich ausgebildet ist.

10. Turbomaschine (1), insbesondere für Luftfahrzeuge, die einem mechanischen Untersetzungsgetriebe (60) nach einem der vorstehenden Ansprüche umfasst.

## Claims

1. A mechanical reduction gear (60) for a turbomachine (1), in particular for an aircraft, said reduction gear comprising:
- a sun gear (70) having an axis (X) of rotation,
- a ring gear (90) which extends around the sun gear (70),
- planet gears (80) which are in mesh with the sun gear (70) and the ring gear (90) and which are held by a planet carrier (100), each planet gear (80) comprising a first toothing (82) with an average diameter D1 for the meshing with the sun gear (70), and a second toothing (84) with an average diameter D2, different from D1, for the meshing with the ring gear (90), each of the first and second toothings (82, 84) comprising herringbone teeth (82d1, 82d2, 84d1, 84d2),
**characterized in that** the first and second toothings (82, 84) of each planet gear (80) are symmetrical with respect to a plane (H) perpendicular to said axis (X) and passing through the middle of the planet gear (80),
and **in that** the herringbone of the first toothing is formed by upstream teeth (82d1) of the first toothing (82) separated from downstream teeth (82d2) of the first toothing (82) by being arranged on either side of the plane (H), and the upstream teeth (84d1) of the second toothing (84) are separated from the downstream teeth (84d2) of the second toothing (84) by the first toothing (82).

2. The mechanical reduction gear (60) according to the preceding claim, wherein the upstream teeth (82d1) of the first toothing (82) are separated by an annular groove (89) from the downstream teeth (82d2) of this first toothing (82).

3. The mechanical reduction gear (60) according to any one of the preceding claims, wherein each planet gear (80) comprises a cylindrical body (86) and an annular web (88) extending radially outwards from the middle of this body (86), the teeth (84d1, 84d2) of the second toothing (84) being located at the axial ends of the body, and the teeth (82d1, 82d2) of the first toothing (82) being located at the outer periphery of the web (88).

4. The mechanical reduction gear (60) according to any one of the preceding claims, wherein the sun gear (70) comprises a toothing with herringbone teeth and comprising upstream and downstream teeth (70a, 70b) located respectively on either side of said plane (H).

5. The mechanical reduction gear (60) according to any one of the preceding claims, wherein the ring gear (90) comprises a toothing with herringbone teeth and comprising upstream and downstream teeth (90d1, 90d2) located respectively on either side of said plane (H) and separated from each other by the second toothing (84).

6. The mechanical reduction gear (60) according to the preceding claim, wherein the teeth (90d1, 90d2) of the ring gear (90) are carried respectively by two rings (90a, 90b) fixed one to the other on a ring gear carrier (120).

7. The mechanical reduction gear (60) according to the preceding claim, wherein the ring gear carrier (120) has a general biconic and symmetrical shape with respect to said plane (H) which passes through the middle of the largest diameter of the ring gear carrier.

8. The mechanical reduction gear (60) according to the preceding claim, wherein the ring gear carrier (120) comprises at its ends bearings (124, 126) for guiding the planet carrier (100) or a drive shaft of the planet carrier.

9. The mechanical reduction gear (60) according to any one of the preceding claims, wherein the ring gear (90) is configured to be fixed in rotation around said axis (X), and the planet carrier (100) is configured to be mobile in rotation around this axis.

10. A turbomachine (1), in particular for an aircraft, comprising a mechanical reduction gear (60) according to any one of the preceding claims.
